# EUROPÄISCHE PATENTSCHRIFT

(11) **EP 2 032 323 B1**
(45) Veröffentlichungstag und Bekanntmachung des Hinweises auf die Patenterteilung: **28.07.2010**
(21) Anmeldenummer: 07785543.5
(22) Anmeldetag: 22.06.2007
(51) Int. Cl.: B27K 3/50, C08L 91/06

(54) **VERWENDUNG VON ÖLHALTIGEN WEICHWACHSEN ALS HYDROPHOBIERUNGSMITTEL IN HOLZWERKSTOFFEN, HOLZWERKSTOFFE SO HERGESTELLT UND VERFAHREN ZUR EINBRINGUNG VON WEICHWACHSEN IN DIE HOLZWERKSTOFFE**
USE OF OILY SOFT WAXES AS HYDROPHOBIZING AGENTS IN TIMBER PRODUCTS, TIMBER PRODUCTS THUS PRODUCED, AND PROCESSES FOR INTRODUCING SOFT WAXES INTO TIMBER PRODUCTS
UTILISATION DE CIRES MOLLES CONTENANT DE L'HUILE EN TANT QU'AGENT DE TRAITEMENT HYDROPHOBE POUR DES MATÉRIAUX EN BOIS, MATÉRIAUX EN BOIS AINSI OBTENUS ET PROCÉDÉ D'APPLICATION DES CIRES MOLLES SUR LES MATÉRIAUX EN BOIS

(30) Priorität: 23.06.2006 DE 102006029313
(43) Veröffentlichungstag der Anmeldung: 11.03.2009
(73) Patentinhaber: Sasol Wax GmbH, 20457 Hamburg (DE)
(72) Erfinder: BUCHHOLZ, Thomas, 21391 Reppenstedt (DE)
(74) Vertreter: Schupfner, Georg
(86) Internationale Anmeldenummer: PCT/DE2007/001109
(87) Internationale Veröffentlichungsnummer: WO 2007/147403

(56) Entgegenhaltungen:
- WO-A-2004/065488
- SU-A1- 1 613 333
- US-A- 3 660 334
- US-A- 5 817 369
- US-B1- 6 183 849

## Beschreibung

Gegenstand der Erfindung ist die Verwendung von Wachsdispersionen enthaltend ölhaltige Wachse als Hydrophobierungsmittel bei der Herstellung von Holzwerkstoffen bzw. in den Holzwerkstoffen. Insbesondere betrifft die Erfindung die Herstellung hydrophobierter Holzwerkstoffe unter Verwendung von Wachsdispersionen aus paraffinischen Weichwachsen, wie sie entweder bei dem Prozess der Erdölraffination direkt anfallen oder im Zuge der Entölung von Wachsen gebildet werden und die so hergestellten Holzwerkstoffe. Weichwachse im Sinne der Erfindung sind paraffinische Wachse, die über 20 Gew.% Ölanteil aufweisen.

Wachse sind eine Klasse von Stoffen, die durch ihre mechanisch-physikalischen Eigenschaften definiert sind. Ein Stoffgemisch enthaltend obigen Ölanteil wird im Sinne dieser Erfindung als Wachs bzw. als Weichwachs bezeichnet, wenn es bei größer 10°C fest ist, insbesondere bei größer 25°C, z.B. von verformbar weich, über knetbar bis brüchig hart, und einen Erweichungspunkt unter 65°C aufweist (jeweils bei Normaldruck, 1013 mbar). Wachse werden weiterhin durch Ölgehalt, Schmelzpunkt und/oder Viskosität charakterisiert.

Bislang galten Weichwachse, die einen Ölgehalt von mehr als 20 Gew.% enthalten, nicht für bzw. in Holzwerkstoffen als Hydrophobierungsmittel geeignet, da ihre Hydrophobierwirkung zu gering ist. Dies trifft insbesondere zu, wenn weniger als 0,5 Gew.% Weichwachs in Relation zum Gewichtsanteil Holz bzw. Holzbestandteile zugesetzt sind.

Die Wirksamkeit der Wachse als Hydrophobierungsmittel hängt sehr stark von ihrer chemischen Zusammensetzung ab. So ist es bekannt, dass n-Paraffine weitaus stärker hydrophobierend wirken als iso-Paraffine. Ferner ist z.B. auf die Veröffentlichung von Roffael, E., Schriever, E., May, H.-A., Adhäsion 11(1982), S.10-19, "Hydrophobierung von Spanplatten mit Paraffin, Teil 1: Kenntnisse und eigene Untersuchungen" und auf die Veröffentlichung von May, H.-A.und Roffael, E. "Hydrophobierung von Spanplatten mit Paraffinen", Teil 4 (Adhäsion 28, (1,2), 17-21) hinzuweisen, wonach festgestellt wurde, dass mit zunehmender Kettenlänge im Bereich zwischen C20 und C36 die Hydrophobierungswirkung der Paraffine zunimmt. Auch aus dieser Veröffentlichung ist bekannt, dass sich die Hydrophobierungswirkung ab einem bestimmten Ölgehalt an verschlechtert.

Vergleiche auch Abbild 3 in W. E. Hsu, R. J. Melanson und P.J. Kozak in "The effect of wax type and content on waferboard properties"; Proceedings twenty-fifth interriational Symposium on particle board and composite materials; 1990: Seiten 85-93; Editor T. M. Maloney, Washington State University, W. A. Pullman.

In dem U.S.-Patent 6,183,849 wird ein Verfahren zur Herstellung von Verbundplatten beschrieben, bei dem der Ölgehalt des Wachses oberhalb von 30 bis 98 Gew.% liegt. Aus den aufgeführten Beispielen wird der negative Einfluss der Verwendung von Öl allein als Hydrophobierungsmittel besonders deutlich. Holzwerkstoffe, die ein Wachs mit einem Ölgehalt von 98 % enthalten, weisen eine deutlich höhere Dickenquellung auf als solche, die ein Slackwax mit einem Ölgehalt von 17,6 % enthalten.

In der WO 2004/065488-A1 wird vorgeschlagen, ölhaltigen Wachsen andere Wachse dergestalt beizumischen, dass das als Hydrophobierungsmittel zu verwendende Wachs mindestens 21 % n-Paraffin enthält.

Aus der SU-A1-1613333 ist bekannt zur Hydrophobierung von OSB (Oriented Strandboards) eine Mischung enthaltend Paraffin, Borax, Oleinsäure, Harnstoff, Kaolin, Ammoniumhexafluorosilikat, Harnstoffformaldehydharz, Kasein, Wasserglas und Wasser einzusetzen, wobei der Ölgehalt des verwendeten Paraffins bei 4 % liegt und dessen Schmelzpunkt bei 72°C. Nach der SU-A1-1613333 wird ein Harnstoff enthaltendes ölarmes Wachs (4% Ölgehalt) durch Zugabe von mehreren anderen Komponenten in seiner Hydrophobierungswirkung verbessert, wobei die Eigenschaftsverbesserung nicht in Zusammenhang mit der Harnstoffzugabe gebracht ist. Die SU-A1-1613333 hat somit nicht zum Gegenstand die Hydrophobierungswirkung von Weichwachs zu verbessern, das einen Ölgehalt von über 20% aufweist.

Bei der Entölung von Wachs fallen Fraktionen an, die einen höheren Ölgehalt aufweisen. Da solche Weichwachse enthaltend hohe Ölanteile eine schwache Hydrophobierungswirkung entfalten, war es Aufgabe dieser Erfindung, die Hydrophobierwirkung solcher Weichwachse zu verbessern und diese dadurch als Hydrophobierungsmittel für Holzwerkstoffe zugänglich zu machen. Insbesondere sollen Wachse wie sie als "Foots Oils" oder "Slackwax" mit hohem Ölanteil anfallen für den Einsatz als Hydrophobierungsmittel zugänglich gemacht werden.

Es wurde überraschend gefunden, dass die Zugabe von Carbonsäureamid-Verbindungen in Form von Harnstoff zu Weichwachsen die Hydrophobierungswirkung steigert und die physikalisch-technologischen Eigenschaften der damit hergestellten Holzwerkstoffe verbessert. Die Erfindung ist durch die unabhängigen Ansprüche charakterisiert. Bevorzugte Ausführungsformen sind Gegenstand der Unteransprüche oder nachfolgend beschrieben.

Die Weichwachse der vorliegenden Erfindung sind Feststoffgemische fester Paraffine und für sich genommen flüssige Kohlenwasserstoffe (entspricht dem Öl bzw. dem Ölanteil). Gegenstand der vorliegenden Erfindung sind genauer gesagt paraffinische Weichwachse die als Gemisch Erweichungspunkte bis 65°C aufweisen.

Diese enthalten neben den üblichen höher schmelzenden Wachsen (für sich genommen z.B. größer 40°C zu einem Anteil von größer 65 Gew.%) auch niedermolekulare Kohlenwasserstoffe (Ölanteil), die bei Raumtemperatur (25°C) flüssig sind. Hierbei können die Weichwachse aus Erdölwachsen, d.h. aus geologischen Quellen, und/oder aus künstlich hergestellten so genannten synthetischen Wachsen zugänglich sein bzw. derartige Bestandteile enthalten.

Der Gehalt von Wachsen an n-Paraffin, iso-Paraffin und Öl unterliegt Schwankungen, je nach Ursprung des Erdöls und Art des Raffinationsprozesses. Man unterscheidet im Allgemeinen so genannte Hartwachse und so genannte Weichwachse ("Soft Wax"). Die Weichwachse bestehen hauptsächlich aus n- und iso-Paraffinen und bei Raumtemperatur flüssigen Kohlenwasserstoffen (Öl). Das untere Ende der Weichwachse hinsichtlich des Erstarrungspunktes bilden die sogenannten "Footsoile" mit einem Schmelzpunkt bzw. Schmelzbereich von 35 bis 45°C, die vergleichsweise viel Öl enthalten, und das obere Ende die "Slackwaxe" mit einem Schmelzpunkt von z.B. 35° bis unter 65°C. Je nach Herkunft des Wachses kann der Ölgehalt hier bis z.B. etwa 35 Gew.% betragen.

Stark ölhaltige Footsoile werden bei der Entölung von "Slackwaxes" erhalten. Die Footsoile können Ölgehalte größer 30 Gew.% aufweisen. Im Sinne der Erfindung können die Weichwachse "Slackwax" oder "Footsoil" sein, solange diese jeweils mehr als 20 Gew.% Öl, vorzugsweise größer 25 und insbesondere größer 30 Gew.%, enthalten. Der Ölanteil kann auch durch Zugabe von Kohlenwasserstoffen, z.B. solchen wie sie typischerweise für Schmieröle eingesetzt werden, eingestellt werden.

Weichwachse haben typischerweise eine Dichte zwischen 0,80 und 0,85 g/cm³ und weisen im Durchschnitt (Zahlenmittel) Kohlenwasserstoffe mit mehr als 16 Kohlenstoffatomen auf

Erfindungsgemäß werden als Hydrophobierungsmittel Weichwachse eingesetzt, die z.B. aus Erdöl gewonnen werden. Auch Fischer-Tropsch-Wachse (FT-Wachse) und Polyolefinwachse, die synthetischen Ursprung sind, können hierfür verwendet werden. Die Wachse können in Form einer wässerigen Dispersion den Holzzerkleinerungsprodukten zur Herstellung der Holzprodukte zugegeben werden.

Die Weichwachse können in Mischungen mit anderen Wachsen als Hydrophobierungsmittel eingesetzt werden.

Die Menge an Harnstoff beträgt zwischen 0,01 und 10 Gew.%, vorzugsweise zu 1 bis 8 Gew.% und insbesondere zwischen 2 und 5 Gew.% (bezogen auf die Dispersion enthaltend das Weichwachs).

Erfindungsgemäß ist es weniger erheblich, ob das Carbonsäureamid in Form von Harnstoff dem ölhaltigen Wachs vor, während oder nach der Herstellung der Wachsdispersion zugegeben wird. Es ist zudem auch möglich nur einen Teil des Harnstoffs vor der Herstellung der Wachsdispersion und einen weiteren Teil nach Herstellung der Wachsdispersion beizugeben. Es ist darüber hinaus möglich, die Wachsdispersion in einer wässrigen Lösung von Harnstoff herzustellen. Es ist ferner möglich, Harnstoff ggf. mit einem geeigneten Emulgator zu versehen und mit dem geschmolzenen Paraffin direkt vor Ort zu vermischen, ggf. durch hochturbulentes Mischen.

Die hergestellten Dispersionen können anionische, kationische oder nicht ionogene Emulgatoren enthalten. Emulgatoren sind grenzflächenaktive amphotere Substanzen oder hochmolekulare Substanzen. Als Emulgatoren seien genannt:
- Alkoholpolyethylenglykolether, z.B. solche der allgemeinen Formel R-O-(R¹-O)ₙ-H,
- Fettsäureesterpolyethylenglykolether, z.B. solche der allgemeinen Formel R-COO-(R¹-O)ₙ-H,
- Alkylpolyalkylenglykolethercarbonsäuren, z.B. solche der allgemeinen Formel R-O-(R¹-O)ₙ-CH₂-COOH bzw. deren Alkanolammonium- oder Alkali- oder Erdalkalimetallsalze,
- Alkylamidoalkylbetaine, z.B. solche der allgemeinen Formel R-CONH(CH₂)ᵤN⁺(CH₃)₂-CH₂-COO⁻,
- Aminoxide, z.B. solche der allgemeinen Formel R-NO(CH₃)₂,
   wobei jeweils
   R einen verzweigten oder linearen, gesättigten oder ungesättigten C₈- bis C₂₀- bzw. C₇- bis C₁₉- Kohlenwasserstoffrest,
   n eine Zahl von 2 bis 20,
   R¹ einen Alkylenrest mit 2 bis 4 Kohlenwasserstoffen, z.B. -C₂H₄- oder -C₃H₆-, ggf. für jedes n verschieden, und
   u eine Zahl von 1 bis 10 darstellt,
- Produkte aus der Alkoxylierung von Triglyceriden, die ganz oder teilweise mit C₆- bis C₂₂ - Fettsäuren verestert sind, wobei pro Mol Triglycerid 2 bis 40 Mol Alkoxylierungsmittel eingesetzt werden,
- Partiell neutralisierte Partialglyceride von ein oder mehrwertigen C2- bis C22-Carbonsäuren, wie z.B. Linolsäure, Stearinsäure, Isostearinsäure, Palmitinsäure, Laurinsäure, Caprylsäure, Caprinsäure, Citronensäure und/oder Milchsäure.
- Ester des Polyglycerins, worin die Carbonsäure-Gruppe vorzugsweise 2 bis 22 Kohlenstoffatome aufweist.
- C6- bis C32- Carbonsäuren, insbesondere C8- bis C26- Fettsäuren vollständig oder partiell, insbesondere vollständig verseift, z.B. mit Aminen oder Aminverbindungen wie Diethanolamin.

Emulgatoren im Sinne der Erfindung sind auch hochmolekulare Substanzen wie Gummi Arabicum, Gum Ghatti oder Celluloseverbindungen.

Die so hergestellte Dispersion kann anderen Wachsdispersionen zugemischt werden.

Gegenstand der Erfindung sind weiterhin Holzwerkstoffe, wie Holzspan- und Holzfaserplatten, enthaltend neben einem Bindemittel, wie Hamstoffformaldehydharz (UF-Harz), Phenolformaldehydharz (PF-Harz), Tanninformaldehydharz (TF-Harz) und/oder Bindemittel auf Iso- bzw Diisocyanatbasis (z.B. PMDI), das erfindungsgemäße Hydrophobierungsmittel enthaltend die Weichwachse und die Carbonsäureamid-Verbindung.

Die Wachse bzw. Paraffine haben hauptsächlich die Aufgabe, die Dickenquellungs- und die Wasseraufnahmegeschwindigkeit der damit hergestellten Holzwerkstoffe zu verzögern. Dies ist insofern von Bedeutung, als die Spanplatten und die Faserplatten bestimmte Grenzwerte bezüglich der Dickenquellung und Wasseraufnahme gemäß den einschlägigen Normen einhalten müssen, die ohne Zugabe eines Hydrophobierungsmittel i.d.R. nicht eingehalten werden. Während der Herstellung kann die Wachsdispersion den Holzspänen bzw. Holzfasern vor oder nach der Bindemittelzugabe oder dem Bindemittel selbst zugesetzt werden.

Die vorliegende carbonsäureamidhaltige Dispersion ist geeignet als Hydrophobierungsmittel für Holzwerkstoffe eingesetzt zu werden, die Bindemittel enthalten, wie alkalisch härtende Phenolformaldehydharze (PF-Harze) und Tanninformaldehydharze (TF-Harze). Auch in Kombination mit Klebstoffen auf Basis von 4,4-Diphenyl-Methan-Diisocyanaten (PMDI) kann die Wachsdispersion gemäß der Lehre der vorliegenden Erfindung eingesetzt werden. Die Bindemittel sind vorzugsweise Formaldehydfrei.

Ferner kann die so hergestellte Wachsdispersion dem für die Herstellung von Holzwerkstoffen vorgesehenen Bindemittel allein oder in Abmischung mit anderen Dispersionen beigegeben werden. Darüber hinaus kann die Wachsdispersion den zu verleimenden Lignocellulosen vor oder nach der Zugabe des Bindemittels zugegeben werden.

Der Ölgehalt im Sinne dieser Erfindung wird entsprechend der Norm ASTM D3235 mit dem Titel: "Standard Test Method for Solvent Extractables in Petroleum Waxes" bestimmt: Hierzu löst man den Probenteil in einem Lösemittel (Mischung aus 50% Methylethylketon und 50% Toluol, kühlt die Lösung ab, um das Paraffin abzuscheiden und filtriert. Der Masseanteil an Öl des Filtrats wird nach Verdampfen des Lösungsmittels durch Wägen des Rückstandes bestimmt.

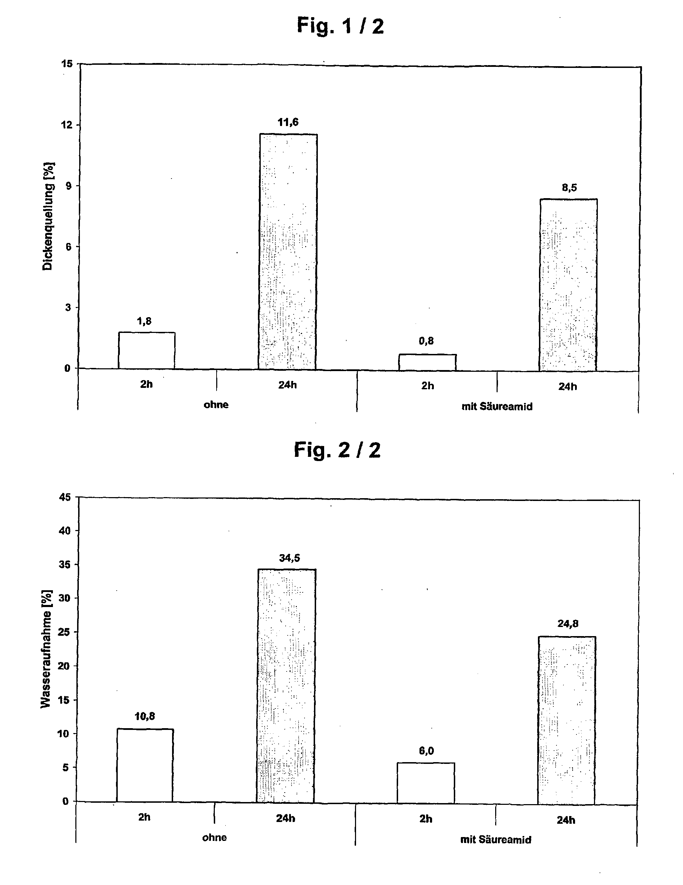

Die Erfindung wird durch die Figur 1 und 2 weiter erläutert.

Figur 1 zeigt die Dickenquellung von Holzfaserplatten nach Wasserlagerung für 2 und 24 Stunden, wobei links das Ergebnis der Faserplatten, die unter Einsatz eines carbonsäureamidfreien Wachses (Vergleichsversuch) und rechts das Ergebnis der mit einem carbonsäureamidhaltigen Wachs hergestellten Holzfaserplatten gezeigt ist. Fig. 2 zeigt entsprechend die Wasseraufnahme.

### Beispiele:

Weichparaffinwachs mit einem Ölgehalt von über 20 Gew.% wurde mit einem anionischen Emulgator in Wasser, dessen pH-Wert mit Ammoniak schwach alkalisch eingestellt war, in eine Wachsdispersion überführt. In einem weiteren Versuch wurde dem Weichparaffinwachs vor der Herstellung der wässerigen Dispersion ein Carbonsäureamid in Form von Harnstoff zugegeben.

| | Vergleichsversuch | Versuch |
|---|---|---|
| - | [Gew.%] | [Gew.%] |
| Wasser: | 40,0 | 40,0 |
| Weichwachs: | 56,5 | 54,5 |
| Emulgator: | 3,5 | 3,5 |
| Harnstoff: | - | 2,0 |

Im Einzelnen wurde eine wässrige Wachsdispersion auf Basis eines Weichwachses (Footsoil mit 27% Ölanteil) hergestellt. Zur Herstellung einer Vordispersion wurde die erforderliche Menge Wasser mit einer Temperatur von ca. 80°C in einen Rührkessel gegeben. Der anionische Emulgator (eine C20- Fettsäure und Diethanolamin) wurde unter Rühren zum Wasser gegeben und zur Reaktion gebracht. Danach wurde die entsprechende Menge geschmolzenes Weichwachs unter Rühren zugegeben. Unter Rühren hat sich nach ca. 5 Minuten eine Voremulsion gebildet. Die Voremulsion wurde nun mit einem Hochdruckhomogenisator bei ca. 120 bar mit anschließender Kühlung weiterverarbeitet. Beide Wachsdispersionen sind auf einen Feststoffanteil von 60 Gew.% eingestellt.

Nach dem zweiten und erfindungsgemäßen Versuch wurde der Weichwachsdispersion bei der Herstellung 2 Gew.% Säureamid in Form von Harnstoff zugegeben.

Mit den beiden Versuchsdispersionen wurden Holzfaserplatten (MDF) hergestellt und diese nach den einschlägigen Normen auf ihre Dickenquellung geprüft. Die Ergebnisse zeigen, dass trotz des niedrigen Wachsanteiles in der Wachsdispersion 2 die Dickenquellung der mit dieser Wachsdispersion hergestellten Platten deutlich niedriger ist als im Falle der Wachsdispersion 1. Die Menge der zugesetzten Wachsdispersion war in beiden Fällen gleich. Die Ergebnisse der Untersuchung sind in Figur 1 und 2 veranschaulicht.

## Patentansprüche

1. Verwendung einer wässrigen Wachsdispersion als Hydrophobierungsmittel bei der Herstellung von Holzwerkstoffen, die unter Verwendung von Holzspänen und/oder Hotzfasern und Bindemitteln herstellbar sind, **dadurch gekennzeichnet, dass** die Wachsdispersion
• ein Weichwachs als feste Phase oder Bestandteil einer festen Phase mit einem Ölgehalt größer 20 Gew.% enthält oder dieses der Wachsdispersion zugesetzt ist, wobei das Weichwachs zumindest bei 10 °C und darunter fest ist und einen Erweichungspunkt unter 65 °C aufweist, sowie weiterhin
• 0,5 Gew.% bis 10 Gew.%, bezogen auf die Wachsdispersion, zumindest eine Carbonsäureamid-Verbindung aufweist, wobei als Carbonsäureamid-Verbindung Harnstoff eingesetzt wird.

2. Verwendung einer Wachsdispersion nach Anspruch 1, **dadurch gekennzeichnet. dass**
a) das Weichwachs als feste Phase einen Ölgehalt von größer 25 Gew.% aufweist,
b) die Carbonsäurcamid-Verbindung in wässriger Lösung in der Wachsdispersion vorliegt;
c) die Weichwachse Footsoil und/oder Slackwaxe enthalten oder daraus hergestellt sind:
d) der Ölanteil in den Weichwachsen Kohlenwasserstoffe sind:
e) das Carbonsäureamid in der Wachsdispersion zu 1 bis 8 Gew.% enthalten ist:
f) die Wachsdispersion Weichwachse, einschließlich anderer Wachse oder Kohlenwasserstoffe, in Mengen von 10 bis 70 Gew.% enthält;
g) die Wachsdispersion weiterhin FT-Wachse und/oder Polyolefinwachse enthält: und/oder
h) die Holzwerkstoffe Holzspan- und Holzfaserplatten sind.

3. Verwendung einer Wachsdispersion nach zumindest einem der Ansprüche 1 oder 2, **dadurch gekennzeichnet, dass** die Weichwachse größer 60 Gew.% der festen Phase der Wachsdispersion ausmachen.

4. Verwendung einer Wachsdispersion nach zumindest einem der Ansprüche 1 oder 2. **dadurch gekennzeichnet, dass** die Weichwachse größer 80 Gew.% der festen Phase der Wachsdispersion ausmachen.

5. Verwendung einer Wachsdispersion nach zumindest einem der Ansprüche 1 oder 2. **dadurch gekennzeichnet, dass** das Weichwachs 20 bis 90 Gew.% neben anderen Wachsen, bezogen auf die Summe an Kohlenwasserstoffen und Wachsen in der Wachsdispersion, ausmacht.

6. Verwendung einer Wachszusammensetzung nach zumindest einem der vorhergehcnden Ansprüche enthaltend die Weichwachse und Carbonsäureamide in einem Gewichtsverhältnis von 100 zu 0,3 bis 100 zu 6 in Holzwerkstoffen als Hydrophobierungsmittel.

7. Verwendung einer Wachszusantmensetzung nach zumindest einem der vorhergehenden Ansprüche enthaltend die Weichwachse und Carbonsäureamide in einem Gewichtsverhältnis von 100 zu 1 bis 100 zu 3 in Holzwerkstoffen als Hydrophobierungsmittel.

8. Verwendung der Wachszusammensetzung nach einem der vorhergehenden Ansprüche als Hydrophobierungsmittel in den Deckschichten oder ausschließlich in den Mittelschichten mehrschichtiger Holzwerkstoffplatten.

9. Holzwerkstoffe herstellbar unter Verwendung von
• Bindemitteln,
• einem Weichwachs mit Ölgehalt größer 20 Gew.%, wobei das Weichwachs zumindest bei 10 °C und darunter fest ist und einen Erweichungspunkt unter 65 °C aufweist, sowie
• zumindest einer Carbonsäureamid-Verbindung, wobei die Carbonsäureamid-Vcrbindung Harnstoff ist, und
wobei der Holzwerkstoff als Holzbestandteile Holzspäne und/oder Holzfasern enthält und/oder daraus hergestellt ist.

10. Holzwerkstoff nach Anspruch 9 **dadurch gekennzeichnet, dass**
a) der Holzwerkstoff die Weichwachse und Carbonsäureamid-Verbindung in einem Gewichtsverhältnis von 100 zu 0.3 bis 100 zu 6 enthält;
b) das Weichwachs einen Ölgehalt von größer 25 Gew.% aufweist:
c) das Weichwachs Footsoil und/oder Slackwaxe enthält oder daraus hergestellt ist.
d) der Ölanteil in dem Weichwachs Kohlenwasscrstoffe sind;
e) der Ölanteil in den Weichwachsen Kohlenwasserstoffe sind und zumindest teilweise aus einem Zusatz an paraffinischem Schmieröl besteht:
f) der Holzwerkstoff weiterhin FT-Wachsc und/oder Polyolefinwachse enthält, und/oder
g) als Bindemittel ein säurehärtendes Harnstoffformaldehydharz, ein alkalisch härtendes Phenolformaldehydharz, ein Tanninformaldehydharz; ein Bindemittel aus Basis von Iso- bzw. Diisocyanaten, ein alkalisch härtendes Phenolformaldehydharz oder ein Klebstoff auf Basis von 4,4'-Diphenyl-Methan-Diisoeyanat eingesetzt wird.

11. Verfahren zur Herstellung von mit Wachs hydrophobierten Holzwerkstoffen, **dadurch gekennzeichnet, dass** man Lignocellulosen in beliebiger Reihenfolge zusetzt:
- ein Weichwachs, wobei das Weichwachs einen Ölgehalt größer 20 Gew.% aufweist, das Weichwachs, auch als Gemisch, bei 10 °C fest ist und einen Erweichungspunkt unter 65 °C aufweist sowie weiterhin
- 0,5 Gew.% bis 10 Gew.% zumindest eine Carbonsäureamid-Verbindung, wobei als Carbonsäureamid-Verbindung Harnstoff eingesetzt wird, und
- zumindest ein Bindemittel zur Verfestigung der Lignocellulosen.

12. Verfahren gemäß Anspruch 11, **dadurch gekennzeichnet, dass** das Bindemittel ein saurehärtendes Harnstoffformaldehydharz, ein alkalisch härtendes Phenolformaldehydharz, ein Tanninformaldehydharz, ein Bindemittel auf Iso- bzw. Diisocyanat-Basis, oder ein Klebstoff auf Basis von 4,4'-Diphenyl-Methan-Diisocyanat ist.

13. Verfahren gemäß Anspruch 11 oder 12, **dadurch gekennzeichnet, dass**
a) die Wachsdispersion vor der Zugabe des Bindemittels den Lignocellulosen zugegeben wird;
b) die Weichwachse und die Carbonsäurcamid-Verbindung in Form einer wässrigen Dispersion oder als Sprühnebel dem Bindemittel zugegeben wird und beide gemeinsam auf die Lignocellulosen aufgebracht werden; und/oder
c) die Wachsdispersion enthaltend die Carbonsäureamid-Verbindung, nach der Zugabe des Bindemittels zugegeben wird.

14. Verfahren gemäß zumindest einem der Ansprüche 11 bis 13, **dadurch gekennzeichnet, dass**
a) das Carbonsäureamid und das Weichwachs bzw. das Wachs enthaltend Weichwachse unmittelbar vor der Besprühung auf die Lignocellulosen vermischt werden, ggf. turbulent;
b) die Weichwachse und die Carbonsäureamid-Verbindung in einem Gewichtsverhältnis von 100 zu 0,3 bis 100 zu 6 in den Lignocellulosen als Hydrophobierungsmittel eingesetzt werden; und/oder
c) dass die Weichwachse zu 0.1 bis 3 Gew.% den Lignocellulosen zugesetzt werden.

15. Verfahren gemäß zumindest einem der Ansprüche 11 bis 14, **dadurch gekennzeichnet, dass** die Lignocellulosen in Form von Holzzerkleinerungsstücken vorliegen.

## Claims

1. A use of an aqueous wax dispersion as a hydrophobizing agent in the production of wood-based materials producible using wood shavings and/or wood fibers and binders, **characterized in that** the wax dispersion
• contains a soft wax as solid phase or component of a solid phase with an oil content greater than 20 wt% or said soft wax is added to the wax dispersion, wherein the soft wax is solid at least at 10°C or lower and has a softening point of less than 65°C, and also
• contains 0.5 wt% to 10 wt%, based on the wax dispersion, of at least one carboxylic acid amide compound, wherein as carboxylic acid amide compound urea is used.

2. The use of a wax dispersion according to claim 1, **characterized in that**
a) the soft wax has an oil content of greater than 25 wt% as the solid phase;
b) the carboxylic acid amide compound is present in aqueous solution in the wax dispersion;
c) the soft waxes contain or are prepared from foots oil and/or slack waxes;
d) the oil content in the soft waxes comprises hydrocarbons;
e) the carboxylic acid amide is present in the wax dispersion in the amount of 1 to 8 wt%;
f) the wax dispersion contains soft waxes, including other waxes or hydrocarbons, in amounts of 10 to 70 wt%;
g) the wax dispersion also contains FT waxes and/or polyolefin waxes; and/or
h) the wood-based materials are particleboards and fiberboards.

3. The use of a wax dispersion according to at least one of claims 1 or 2, **characterized in that** the soft waxes constitute more than 60 wt% of the solid phase of the wax dispersion.

4. The use of a wax dispersion according to at least one of claims 1 or 2, **characterized in that** the soft waxes constitute more than 80 wt% of the solid phase of the wax dispersion.

5. The use of a wax dispersion according to at least one of claims 1 or 2, **characterized in that** the soft wax constitutes 20 wt% to 90 wt%, in addition to other waxes, based on the sum of hydrocarbons and waxes in the wax dispersion.

6. The use of a wax composition according to at least one of the preceding claims, containing the soft waxes and carboxylic acid amides in a weight ratio of 100 to 0.3 through 100 to 6 as the hydrophobizing agent in wood-based materials.

7. The use of a wax composition according to at least one of the preceding claims, containing the soft waxes and carboxylic acid amides in a weight ratio of 100 to 1 through 100 to 3 as the hydrophobizing agent in wood-based materials.

8. The use of the wax composition according to any one of the preceding claims as hydrophobizing agent in the cover layers or exclusively in the middle layers of multilayer wood-based boards.

9. The wood-based material producible by the use of
• binders,
• a soft wax with an oil content greater than 20 wt%, wherein the soft wax is solid at 10°C or lower and has a softening point of less than 65°C, and
• at least one carboxylic acid amide compound, wherein the carboxylic acid amide compound is urea, and
wherein the wood-based material comprises as wood components wood shavings (chipping) and/or wood fibers or is made thereform.

10. The wood-based material according to claim 9, **characterized in that**
a) the wood-based material contains the soft waxes and carboxylic acid amide compound in a weight ratio of 100 to 0.3 through 100 to 6;
b) the soft wax has an oil content of greater than 25 wt%;
c) the soft wax contains or is produced from foots oil and/or slack waxes;
d) the oil content in the soft wax comprises hydrocarbons;
e) the oil content in the soft wax comprises hydrocarbons and the oil content consists at least partially of an additive of paraffinic lubricating oil;
f) the wood-based material also contains FT waxes and/or polyolefin waxes; und/oder
g) an acid-curing urea-formaldehyde resin, an alkali-curing phenol-formaldehyde resin, a tannin-formaldehyde resin or a binder based on isocyanates and/or diisocyanates is used as the binder, an alkali-curing phenol-formaldehyde resin or an adhesive based on 4,4'-diphenylmethane-diisocyanate.

11. The method for producing wood-based materials hydrophobized with wax, **characterized in that** to lignocelluloses are added in any order:
- a soft wax, wherein the soft wax has an oil content greater than 20 wt%; the soft wax, also as a mixture, is solid at 10°C and has a softening point below 65°C, as well as
- 0.5 wt% to 10 wt% of at least one carboxylic acid amide compound, wherein urea is used as the carboxylic acid amide, and
- at least one binder is used for solidifying the lignocelluloses.

12. The method according to claim 11, **characterized in that** the binder is an acid-curing urea-formaldehyde resin, an alkali-curing phenol-formaldehyde resin, a tannin-formaldehyde resin or a binder based on isocyanate or diisocyanate, or an adhesive based on 4,4' diphenylmethane-diisocyanate.

13. The method according to claim 11 or 12, **characterized in that**
a) the wax dispersion is added to the lignocelluloses before adding the binder;
b) the soft waxes and the carboxylic acid amide compound are added to the binder in the form of an aqueous dispersion or as a spray mist, and the two together are applied to the lignocelluloses; und/oder
c) the wax dispersion containing the carboxylic acid amide compound is added after adding the binder.

14. The method according to at least one of claims 11 to 13, **characterized in that**
a) the carboxylic acid amide and the soft wax and/or the wax containing soft waxes is/are mixed, optionally with turbulence, immediately before being sprayed onto the lignocelluloses;
b) the soft waxes and the carboxylic acid amides are used as hydrophobizing agents in the lignocelluloses in a weight ratio of 100 to 0.3 through 100 to 6; und/oder
c) the soft waxes are added to the lignocelluloses in the amount of 0.1 to 3 wt%.

15. The method according to at least one of claims 11 to 14, **characterized in that** lignocelluloses are used in the form of disintegrated wood pieces.

## Revendications

1. Utilisation d'une dispersion aqueuse de cire en tant qu'agent de traitement hydrophobe pour la fabrication de matériaux en bois, qui peuvent être fabriqués en utilisant des copeaux et/ou des fibres de bois et des liants, **caractérisée en ce que** la dispersion de cire :
• comprend une cire molle à titre de phase solide ou composant d'une phase solide, ayant une teneur en huile de plus de 20 % en poids, ou est ajoutée à celle de la dispersion de cire, la cire molle étant solide à une température d'au moins 10°C et en dessous et présentant un point de ramollissement inférieur à 65°C, et également
• comprend 0,5 % en poids à 10 % en poids, par rapport à la dispersion de cire, d'au moins un composé d'amide d'acide carboxylique, l'urée étant utilisée à titre de composé d'amide d'acide carboxylique.

2. Utilisation d'une dispersion de cire selon la revendication 1, **caractérisée en ce que** :
a) la cire molle, à titre de phase solide, présente une teneur en huile de plus de 25 % en poids ;
b) le composé d'amide d'acide carboxylique se présente en solution aqueuse dans la dispersion de cire ;
c) les cires molles contiennent du footsoil et/ou des slack waxes ou en sont fabriquées ;
d) la proportion d'huile dans les cires molles sont des hydrocarbures ;
e) l'amide d'acide carboxylique dans la dispersion de cire est présent à un taux de 1 à 8 % en poids ;
f) la dispersion de cire comprend des cires molles, y compris d'autres cires ou hydrocarbures, en des quantités allant de 10 à 70 % en poids ;
g) la dispersion de cire comprend en outre des cires FT et/ou des cires de polyoléfine ; et /ou
h) les matériaux en bois sont des panneaux en copeaux ou fibres de bois.

3. Utilisation d'une dispersion de cire selon au moins une des revendications 1 ou 2, **caractérisée en ce que** les cires molles constituent plus de 60 % en poids de la phase solide de la dispersion de cire.

4. Utilisation de la dispersion de cire selon au moins une des revendications 1 ou 2, **caractérisée en ce que** les cires molles constituent plus de 80 % en poids de la phase solide de la dispersion de cire.

5. Utilisation de la dispersion de cire selon au moins une des revendications 1 ou 2, **caractérisée en ce que** la cire molle constitue 20 à 90 % en poids, en plus des autres cires, par rapport à la somme des hydrocarbures et des cires dans la dispersion de cire.

6. Utilisation d'une composition de cire selon au moins une des revendications précédentes contenant les cires molles et les amides d'acide carboxylique en un rapport pondéral allant de 100 / 0,3 à 100 / 6 dans les matériaux en bois à titre d'agent de traitement hydrophobe.

7. Utilisation d'une composition de cire selon au moins une des revendications précédentes contenant les cires molles et les amides d'acide carboxylique en un rapport pondéral allant de 100 / 1 à 100 / 3 dans les matériaux en bois à titre d'agent de traitement hydrophobe.

8. Utilisation de la composition de cire selon une des revendications précédentes à titre d'agent de traitement hydrophobe dans des couches de couverture ou exclusivement dans des couches médianes de panneaux en bois multicouches.

9. Matériau en bois pouvant être fabriqué en utilisant :
• des liants,
• une cire molle ayant une teneur en huile de plus de 20 % en poids, la cire molle étant solide à une température d'au moins 10°C et en dessous et présentant un point de ramollissement inférieur à 65°C, et
• au moins un composé d'amide d'acide carboxylique, le composé d'amide d'acide carboxylique étant l'urée, et
le matériau en bois comprenant, à titre de composants de bois, des copeaux de bois et/ou des fibres de bois et/ou en étant fabriqué.

10. Matériau en bois selon la revendication 9, **caractérisé en ce que**
a) le matériau en bois comprend les cires molles et le composé amide d'acide carboxylique en un rapport pondéral de 100/0,3 à 100/6 ;
b) la cire molle présente une teneur en huile de plus de 25 % en poids ;
c) la cire molle comprend du footsoil et/ou des slack waxes ou en est fabriquée ;
d) la proportion d'huile dans la cire molle est constituée par des hydrocarbures ;
e) la proportion d'huile dans les cires molles est constituée par des hydrocarbures et se compose au moins partiellement d'une addition d'huile lubrifiante paraffinique ;
f) le matériau en bois comprend également des cires FT et/ou des cires de polyoléfine ; et/ou
g) on met en oeuvre à titre de liant une résine urée-formaldéhyde durcissant en milieu acide, une résine phénol-formaldéhyde durcissant en milieu basique, une résine tanin-formaldéhyde ; un liant constitué d'une base d'iso- ou de diisocyanates, une résine phénol-formaldéhyde durcissant en milieu basique ou un adhésif à base de 4,4'-diisocyanate de diphénylméthane.

11. Procédé de fabrication de matériaux en bois rendus hydrophobes grâce à la cire, **caractérisé en ce que** l'on ajoute aux lignocelluloses dans un ordre quelconque :
• une cire molle, la cire molle présentant une teneur en huile supérieure à 20 % en poids, la cire molle, également sous forme de mélange, étant solide à 10°C et présentant un point de ramollissement inférieur à 65°C ainsi que
• 0,5 % en poids à 10 % en poids d'au moins un composé d'amide d'acide carboxylique, l'urée étant mise en oeuvre à titre d'amide d'acide carboxylique, et
• au moins un liant pour solidariser les lignocelluloses.

12. Procédé selon la revendication 11, **caractérisé en ce que** le liant est une résine urée-formaldéhyde durcissant en milieu acide, une résine phénol-formaldéhyde durcissant en milieu basique, une résine tanin-formaldéhyde, un liant constitué d'une base d'iso- ou de diisocyanates, ou un adhésif à base de 4,4'-diisocyanate de diphénylméthane.

13. Procédé selon la revendication 11 ou 12, **caractérisé en ce que**
a) la dispersion de cire est ajoutée aux lignocelluloses avant l'addition du liant ;
b) les cires molles et le composé d'amide d'acide carboxylique sont ajoutés au liant sous la forme d'une dispersion aqueuse ou d'un brouillard nébulisé et les deux sont déposés conjointement sur les lignocelluloses ; et /ou
c) la dispersion de cire comprenant le composé d'amide d'acide carboxylique est ajoutée après l'addition du liant.

14. Procédé selon au moins une des revendications 11 à 13, **caractérisé en ce que**
a) l'amide d'acide carboxylique et la cire molle ou la cire contenant les cires molles sont mélangés directement avant la pulvérisation sur les lignocelluloses, le cas échéant en flux turbulent ;
b) les cires molles et le composé d'amide d'acide carboxylique sont mis en oeuvre en un rapport pondéral de 100/0,3 à 100/6 dans les lignocelluloses à titre d'agents de traitement hydrophobe ; et/ou
c) les cires molles sont ajoutées à un taux de 0,1 à 3 % en poids aux lignocelluloses.

15. Procédé selon au moins une des revendications 11 à 14, **caractérisé en ce que** les lignocelluloses se présentent sous la forme de morceaux de bois broyés.
